# EUROPEAN PATENT SPECIFICATION

(11) **EP 0 839 451 B1**
(45) Date of publication and mention of the grant of the patent: **02.11.2005**
(21) Application number: 97306559.2
(22) Date of filing: 27.08.1997
(51) Int. Cl.: A21D 2/18

(54) **Improvements in the production of bread**
Herstellung von Brot
Fabrication de pain

(30) Priority: 30.10.1996 JP 32325396
(43) Date of publication of application: 06.05.1998
(73) Proprietor: Kawano, Nobuhisa, Tokyo 169 (JP)
(72) Inventor: Kawano, Nobuhisa, Tokyo 169 (JP)
(74) Representative: Lee, Nicholas John

(56) References cited:
- WO-A-90/07880
- US-A- 5 041 299
- PATENT ABSTRACTS OF JAPAN vol. 015, no. 425 (C-0879), 29 October 1991 (1991-10-29) & JP 03 175926 A (YASUHIRO TAKEIRI), 31 July 1991 (1991-07-31)

## Description

The present invention relates to improvements in the production of bread. More particularly, it relates to an improved method of producing high-quality bread where the step of preparing dough with water, which is indispensable in conventional bread production, is modified, and also to such dietary fibrous bread per se as produced according to the improved method.

As is well known, bread is, in general, produced by adding yeast and salt to the main raw material, wheat flour or other cereal flour, to prepare dough, fermenting the dough, and baking or steaming it (See "New Edition of Encyclopedia of Food Industry", edited by the Food Industry Society of Japan, and published by Kohrin Co., 1993).

For such bread production are known a direct kneading method where the raw materials are all at once kneaded and a sponge dough method. Recently, e.g., a liquid seed method has been proposed, which includes a batch method and a continuous method. Also are known partially modified methods as derived from these methods. As one example is referred to a method of using a powerful mixer or a dough improver to shorten the time for fermentation of dough.

However, such bread as produced according to such known methods comprising kneading raw materials with water to give dough, fermenting the resulting dough and then baking it, is light bread from which most of the water as used in preparing the dough has been lost. Therefore, such light bread becomes rapidly hardened and brittle immediately after its production. In order to overcome this problem, sugar and oils and fats are used in the production of bread. Bread produced in such a way can be creamy, but can not be elastic. For example, it becomes brittle on the day following its production. The more it is chewed, the stickier or mucous its texture becomes. For these reasons, there is general recognition that bread tastes nice only when it is fresh and that fresh bread shall be put on the counters in bakeries immediately after having been cooled spontaneously in air, like other cookies. Even though re-heated, bread of that type can not restore its original fresh taste but becomes brittle. If heated in an microwave oven, the bread loses its original fresh taste but becomes sticky or mucous. Accordingly, slices of bread are toasted in a toaster, but the toasted bread becomes more brittle. Such brittle, toasted bread is generally eaten with butter or jam. Thus, the conventional methods of producing bread in which water (free water) is used in the step of preparing dough are still problematic in that the taste of the bread produced is unsatisfactory.

On the other hand, in an attempt to make good use of dietary fibers, they have been used as one of the raw materials to produce bread. Such method of producing bread is, however, problematic in that the bread loses its creaming quality during the step of baking it. Another attempt to mix purified konjak flour, being a raw material for commercial Japanese konjak products, with wheat flour for producing bread from the resulting flour mixture has also been made. That was, however, ineffective in improving the quality of the bread. To produce commercial Japanese konjak products, konjak flour is first mixed with water and swollen (over a period of 100 minutes or longer), and then kneaded with a coagulant to give konjak paste, and the resulting paste is shaped and heated to give irreversibly gelled konjak products. The thus prepared konjak products are sold on the market. In a still another attempt, adding such konjak paste neither shaped nor heated to the ordinary raw materials of bread has been tried. In greater details, water (free water) is first added to and mixed with ordinary raw materials of bread and thereafter a suitable amount of such konjak paste is added thereto and kneaded to give dough. In these attempts, however, the use of konjak flour could not produce any meaningful results, and the mismatched combination of bread and konjak, the former being a Western-style food while the latter being a Japanese-style one, could provide no approach to diversified changes in dietary habits. At present, therefore, there is no development in the good use of dietary fibre bread.

Water is definitely needed in the preparation of dough for bread; it improves the expansion of the dough and is indispensable in homogenizing the raw materials into dough. Therefore, fresh bread is both aromatic and tasty when it does not contain any excess water. Thus, bread has been served as the principal food all over the world. However, with the development of its mass production, bread is often served on the day following its production. Such one-day-old bread is often hard or stale, has lost its original aroma and its texture is often sticky or mucous. These problems have been inevitable to bread, and have not yet been solved.

In order to compensate for these drawbacks, various food additives are used in producing bread. However, at present, it can be said that such additives still cannot improve the technique of producing bread. For example, alum (potassium aluminium sulphate) is used to improve the expansion of dough and the crispness of bread. Sodium metaphosphate, pyrophosphates, polyphosphates or the like are used for controlling the viscosity of paste to be dough whereby the crispness of bread can be improved. In addition, esters such as glycerin fatty acid esters, propylene glycol fatty acid esters and sorbitan fatty acid esters are used for anti-aging of bread. However, since it is expected that the demand for bread of various types, including loaves of bread, will greatly increase in the future, it is necessary that these additives are not used in bread.

The present inventor has assiduously studied in order to develop a technique of producing high-quality bread without using any food additives, which bread, even after having been stored for a few days, still keeps a creaming quality without becoming hard and without having any undesirable sticky or mucous texture.

According to the present invention, there is provided a method for producing bread, comprising:
preparing dough;
fermenting the dough; and
baking or steaming the dough to produce bread, characterised in that the dough is prepared by mixing wheat or other cereal flour, yeast, and a hydrate gel of glucomannan.

The present inventor has found that when water existing in a hydrate gel of glucomannan (bound water) is used in place of ordinary water (free water) in the step of preparing dough in conventional bread production, high-quality bread can be produced without using any food additives.

In one embodiment, the present invention relates to a method for producing dietary fibre bread comprising adding to the main raw material, wheat flour or other cereal flour, yeast and salt and optionally saccharides, oils, fats, milk products and other auxiliary raw materials to prepare dough, fermenting the dough, and baking or steaming it to produce bread, which method is characterized in that a hydrate gel of glucomannan is used in place of free water in the step of preparing the dough. A synthetic baking powder can be used in place of yeast to omit the fermentation step. The present invention also relates to dietary fibre bread produced according to these methods.

The present invention will now be described in more detail.

In the method of the present invention, water contained in a hydrate gel of glucomannan (this may be herein referred to as "bound water") is used in the place of ordinary water (this may be herein referred to as "free water") that is used in the dough preparing step in conventional bread production. In other words, a hydrate gel of glucomannan as such is used in the method of the present invention.

Embodiments of the present invention can have the same steps as those in ordinary bread production. Therefore, in the step of preparing dough in the method of the present invention, in which yeast and wheat flour or cereal flour are mixed, and salt, saccharides, oils, fats, milk products and other auxiliary raw materials are optionally added thereto to prepare dough, all of these materials can be the same as those used in conventional bread production. Yeast food is within the scope of such auxiliary raw materials.

The use of a hydrate gel of glucomannan in place of free water in the step of preparing dough will now be described in more detail.

As is well known, an aqueous solution of glucomannan gels on addition of a coagulant such as an alkali compound, e.g., Ca(OH)₂, to give a hydrate gel. When heated, this hydrate gel is converted into an irreversible elastic gel. This irreversible elastic gel is a konjak product which is a traditional Japanese food. For example, a hydrate gel of glucomannan is used in the production of konjak products.

Any and every type of glucomannan can be used for preparing its hydrate gel for use in the present invention, provided that it can be coagulated to form its hydrate gel. One example is a so-called konjak-seiko (purified konjak flour) consisting essentially of glucomannan. It is desirable that the hydrate gel of glucomannan used in the present invention is prepared from glucomannan particles which are capable of passing through a 160-mesh sieve, more preferably through a 180-mesh sieve, so that the glucomannan does not have to be swelled. Glucomannan can be used in combination with polysaccharides and other materials. Details of such materials are disclosed in Japanese Patent Application Laid-Open No. 5-38263.

The amount of water to be added to and mixed with fine-powdered glucomannan to prepare its hydrate gel can be such that the resulting hydrate gel can be easily kneaded with the other materials of bread to produce an equilibrated condition, and such that the expansion of dough is not hindered in the fermentation step. From these points of view, it can be from about 20 to about 80 parts by weight, preferably from about 30 to about 60 parts by weight, per one part by weight of glucomannan.

Any and every coagulant generally used in producing ordinary edible konjak products is employable herein for coagulating the gel. If an alkali agent such as Ca(OH)₂ is used as the coagulant, it should be used in an amount suitable for coagulating glucomannan without making the resulting gel sticky or mucous, and without making it have any offensive odour. The amount can be from 1 to 5%, preferably from 2 to 3%, based on the weight of the glucomannan. One or more alkali agents can be used singly or combined. If two or more alkali agents are used, they can be added to glucomannan at the same time (as a mixture) or separately.

To produce a hydrate gel of glucomannan, for example, fine-powdered glucomannan is mixed and stirred with water, optionally along with other materials such as polysaccharides, for a few minutes, whereby the glucomannan is swollen and dissolved in the water. The resulting solution is mixed and kneaded with an aqueous solution or suspension of a coagulant having a suitable concentration. Thus, the intended hydrate gel of glucomannan is coagulated.

Alternatively, a hydrate gel of glucomannan can also be produced, as will be later exemplified in Example 1, by first mixing a fine-powdered glucomannan, along with optional materials such as polysaccharides, and a powdered coagulant such as Ca(OH)₂, and then mixing and kneading the resultant powdered mixture with water for a few minutes. The powdery mixture is changed into paste, after having been mixed, stirred and kneaded with water for several minutes. In this paste, glucomannan is not fully swollen, and about half thereof is hydrated while still being in the form of particles. Left as it is, glucomannan becomes gradually swollen to be in the completely swollen condition. See Example 2 below. If a hydrate gel of glucomannan is prepared according to this process, it is unnecessary separately to prepare a suspension of a coagulant.

A hydrate gel of glucomannan thus prepared in the manner mentioned above can be directly added to and kneaded with powdered raw materials for bread, such as wheat flour and the like, in place of water (free water), in order to give dough. The amount of hydrate gel of glucomannan to be used herein can be from 0.4 to 1.5 parts by weight per one part of weight of the powdered raw materials for bread, in order that the gel added does not interfere with the expansion of dough and that the bread produced may keep its elasticity and be prevented from aging. For example, for loaves of bread, the amount of the gel to be added can be 0.8 parts by weight.

The dough thus prepared can be processed in any ordinary manner to obtain bread.

In place of being expanded through fermentation with yeast, the dough can be expanded into foamy bread with a synthetic expander such as a synthetic baking powder. The method according to the present invention of using a hydrate gel of glucomannan in place of water in the step of preparing dough is also applicable to the production of such foamy bread, while producing good results. Therefore, the production of such foamy bread is within the scope of the present invention.

In principle, the skins of buns with a filling, such as Chinese buns, are produced in basically the same manner as the bread production mentioned hereinabove. Therefore, the production of the skins of buns shall be within the scope of the present invention. Accordingly, the method of producing such buns and also the buns produced according to said method shall be naturally within the scope of the present invention, as being associated with the skins of the buns.

The calorific content of Chinese buns can be lowered by incorporating a hydrate gel of glucomannan into their fillings. Chinese buns having a hydrate gel of glucomannan in both their skins and fillings are within the scope of the present invention.

Some proposals of adding glucomannan, a dietary fiber, to bread have heretofore been made in an attempt to produce healthy bread. However, no one has succeeded in incorporating dietary fibers into bread without deteriorating the quality thereof.

If the water existing in a hydrate gel of glucomannan (in the form of bound water therein) is used in preparing dough for bread, according to the present invention, glucomannan is inevitably introduced into bread. Only when glucomannan is incorporated into bread in that manner, is it helpful in keeping and improving the quality of bread.

### Examples:

Now, the present invention will be described more concretely hereinunder with reference to the following Examples.

### Example 1 (Dietary Fibrous Bread):

10 g of fine-powdered glucomannan having passed through a 160-mesh sieve, 5 g of dextrin and 0.25 g of Ca(OH)₂ were weighed to be 15.25 g in total (raw material group A), and mixed and kneaded with 400 g of water (20° C) for about 2 minutes to give a pasty hydrate gel. 180 g of the gel was added to and kneaded with 200 g of strong wheat flour, 3 g of dry yeast, 3 g of salt, 10 g of granular sugar and 20 g of salt-free butter, totaling 236 g (raw material group B), to prepare 416 g of dough. Next, this was divided and put into two stainless steel vats, fermented in a thermostat (at 35° C) for 60 minutes, taken out for degassing or punching, again put into the vats, further fermented for 40 minutes, shaped to have a desired shape, coated with a stirred mixture of egg yolk, sugar and water at their tops, still again fermented for 10 minutes, and finally baked in an oven (at 150° C) for 15 minutes to prepare bread.

The inside crosshinked structure of the bread thus prepared was a randomly crosslinked one. When torn, the bread gave its inside profile not oriented in one direction, and the bread kept a good elasticity. After having been spontaneously cooled in air for 60 minutes, the bread was weighed to be 380 g. Two days after its production, the bread still had creaming quality and elasticity. When the cut surface of the thus stored bread was pushed with a finger, it restored its original condition immediately after having been separated from the finger. When eaten with neither jam nor butter applied thereto, the bread was unexpectedly very delicious, and it did not require toasting.

### Example 2 (Dietary Fiber Bread):

The same components as those constituting the raw material group A as in Example 1, except that the fine-powdered, 160 mesh-passing glucomannan was replaced with ordinary, commercially-available konjak seiko (konjak flour), were mixed and kneaded with 600 g of water (at 20° C) for about 30 minutes to have a viscosity at which no glucomannan particles were precipitated, and then allowed to keep static for about 6 hours to prepare a pasty hydrate gel. 180 g of the gel was mixed and kneaded with 236 g of the same mixture of the raw material group B as in Example 1 to prepare 416 g of dough, which was then processed in the same manner as in Example 1 to prepare bread.

After having been spontaneously cooled in air, the bread was weighed to be 400 g. The process of producing the bread in this Example 2 was the same as in Example 1, except that the 160 mesh-passing glucomannan in Example 1 had been replaced with ordinary konjak flour and that the hydrate gel was prepared in Example 2 by swelling with a larger amount of water under a static condition. That is, the other raw materials used in Example 2 were the same as those in Example 1 except for the particle size of glucomannan and the amount of water. The bread prepared herein was good, like that prepared in Example 1.

Incidentally, with respect to bread made by using konjak seiko (konjak flour) as glucomannan as in Example 2, the offensive odor peculiar to glucomannan sometimes remains in the bread product for the following reasons;

That is, in that case, glucomannan is water-swollen into a colloidal state, and, in turn, a part of it sometimes can not completely come into contact with Ca(oh)₂ or aqueous Ca(OH)₂ suspension as the alkali coagulant. In such case, that part will not coagulate irreversively, which, in turn, will cause a sticky or mucous texture or the offensive odor.

To prevent these, just before the main raw material wheat flour and others (corresponding to such raw material group B as in Example 2) and a water-swollen glucomannan (corresponding to such a pasty hydrate gel prepared by keeping static a mixture of konjak flour and water for about 6 hours as in Example 2) are mixed and kneaded, the water-swollen glucomannan needs to be well stirred or kneaded for about 1 - about 2 minutes in such a way that the glucomannan comes into such complete contact with Ca(OH)₂ as with water.

As could be understood from the above, in order to prevent a sticky or mucous texture or the offensive odor where konjak flour is used as glucomannan, such an additional step as referred to just above is needed when a hydrate gel of glucomannan is mixed and kneaded with the main raw material wheat flour and others. Except for such additional step, konjak flour can give the resultant bread such good properties as a fine-powdered glucomannan passing through a 160-mesh sieve does.

### Example 3 (Chinese Buns with a Filing):

200 g of the hydrate gel as prepared in the same manner as in Example 1 was mixed and kneaded with 200 g of medium wheat flour, 2 g of dry yeast, 6 g of sugar and 2 g of salt, totaling 210 g as raw materials for the skin of buns, to prepare 410 g of dough for the skin of buns. Apart from this, 150 g of commercially-available, raw bean jam, 20 g of this, 150 g of commercially-available, raw bean jam, 20 g of vegetable oils and fats and 2 g of ground sesame were kneaded under heating to prepare 130 g of a bean jam paste. 20 g of this bean jam paste was covered with 40 g of the dough for the skin prepared above to prepare a ball weighing 60 g. Six balls of that type were prepared in all. After having been coated with paraffin paper at their bottom, these were put into a steaming basket, fermented for 60 minutes in a thermostat held at a temperature of 35° C and at a humidity of 75 %, and then steamed in a steamer for 30 minutes. Thus were prepared herein six buns each with a beam-jam filling. After having been spontaneously cooled in air, these were rapidly frozen at -20° C. After one week, the frozen Chinese buns were thawed and heated in a microwave oven for 2 minutes and eaten. These had been well expanded with still having their good aroma, and gave a good crispy texture. The taste of the re-heated buns were the same as that of fresh and just-steamed buns.

In this case, it is also possible to add, as an ingredient, a hydrate gel of glucomannan to the bean-jam filling.

Also in this case, if a filling as prepared by frying minced pork, spices, boiled bamboo shoots and minced leeks with lard, followed by seasoning them with seasonings such as soy sauce, sugar, salt, Japanese sake, MSG and others, is covered with the dough for the skin prepared above, and processed in the same manner as in the above, Chinese meat buns can be produced.

For such Chinese meat buns, a hydrate gel of glucomannan can be added to the filling by kneading it with the raw materials of the filling followed by frying them.

Needless-to-say, Chinese meat buns with such a filling as prepared with the use of the hydrate gel of glucomannan are favorable as being low-caloric and healthy.

Even though no food additives (e.g., emulsifier, alum, sodium metaphosphate, ascorbic acid, and others) that are used for ordinary buns in order to prevent sticky or mucous texture, to ensure expansion, to keep elasticity and to ensure crisp texture, are added to the buns of these types, the resultnt buns have still good physical properties, with no defects.

When a hydrate gel of glucomannan (containing bound water therein) is used in preparing dough in the production of bread, according to the present invention, the bread is much improved in that it does not age quickly, it keeps its elasticity, it has no sticky or mucous feel and it has good crispness, even though the bread requires final baking. Therefore, the method of the present invention requires no food additives (e.g., emulsifier, alum, sodium metaphosphate, sodium lactate, ascorbic acid, etc.) which have hitherto been required for preventing aging, for forming gas, for improving crispness and for keeping good elasticity.

Further, dietary fibre breads produced by methods in accordance with the present invention meet the recent tendency towards healthy foods because they are low in calories. Thus, the present invention has realised the provision of a completely healthy bread with no food additives. Since the bread is massive and weighty (like boiled rice), it satisfies anyone who desires to take low-calorie diets. The reason why the bread is massive and weighty is because water bound to glucomannan, while being clathrated with glucomannan to produces its hydrate gel, is used in the step of preparing dough, so that the water existing in the bread is difficult to remove.

Light bread with a good shape has heretofore been produced by using various food additives. As opposed to this, the present invention has realised fibre bread suitable for daily diets. Heretofore, only nominal bad-tasting bread has been sold in the market, owing to the bakers' conveniences. The present invention has provided an approach to the removal of this bad habit in bakeries.

In addition, according to the present invention, it has become possible to provide steamed bread, including Chinese buns, on the market. The steamed bread of the invention has the same advantages as those of the baked bread mentioned above. Thus, the potential economic effects produced by the invention are extremely great.

## Claims

1. A method for producing bread, comprising:
preparing dough;
fermenting the dough; and
baking or steaming the dough to produce bread, **characterised in that** the dough is prepared by mixing wheat or other cereal flour, yeast, and a hydrate gel of glucomannan.

2. A method as claimed in claim 1, modified in that a synthetic baking powder is used in place of the yeast and the fermentation step is omitted.

3. A method as claimed in claim 1 or claim 2, wherein the hydrate gel of glucomannan is prepared from a fine-powdered glucomannan that passes through a 160-mesh sieve.

4. A method as claimed in claim 1, 2 or 3, wherein one or more of saccharides, oils, fats, milk products and salt are also used in the preparation of the dough.

5. A method as claimed in any preceding claim, wherein, before fermenting and steaming, the dough is formed to enclose a filling, such that a Chinese bun is produced after steaming.

6. A method as claimed in claim 5, wherein the filling is prepared with the use of a hydrate gel of glucomannan.

7. Dough comprising: wheat or other cereal flour; yeast or a synthetic baking powder; and a hydrate gel of glucomannan.

8. Dough as claimed in claim 7, further comprising one or more of saccharides, oils, fats, milk products and salt.

## Patentansprüche

1. Verfahren zur Herstellung von Brot, umfassend:
Herstellen von Teig;
Fermentieren des Teigs; und
Backen oder Dampfbehandeln des Teigs zur Herstellung von Brot, **dadurch gekennzeichnet, dass** der Teig hergestellt wird durch Vermischen von Weizenmehl oder einem Mehl einer anderen Cerealie, Hefe und einem Hydratgel von Glukomannan.

2. Verfahren nach Anspruch 1, **dadurch** modifiziert, dass ein synthetisches Backpulver an Stelle der Hefe verwendet und der Fermentationsschritt weggelassen wird.

3. Verfahren nach Anspruch 1 oder Anspruch 2, wobei das Hydratgel von Glukomannan aus einem fein-pulvrigen Glukomannan hergestellt wird, das durch ein 160-Mesh-Sieb geht.

4. Verfahren nach den Ansprüchen 1, 2 oder 3, wobei bei der Herstellung des Teigs ferner ein oder mehrere Saccharide, Öle, Fette, Milchprodukte und Salz verwendet wird.

5. Verfahren nach einem der vorstehenden Ansprüche, wobei vor dem Fermentieren und Dampfbehandeln der Teig unter Einschluss einer Füllung ausgebildet wird, so dass nach Dampfbehandeln eine Chinesische Teigware erhalten wird.

6. Verfahren nach Anspruch 5, wobei die Füllung mit Hilfe eines Hydratgels von Glukomannan hergestellt wird.

7. Teig, enthaltend: Weizen- oder anderes Cerealienmehl; Hefe oder ein synthetisches Backpulver; und ein Hydratgel von Glukomannan.

8. Teig nach Anspruch 7, der weiter ein oder mehrere Saccharide, Öle, Fette, Milchprodukte und Salz enthält.

## Revendications

1. Procédé destiné à fabriquer du pain, comprenant :
la préparation d'une pâte ;
la fermentation de la pâte ; et
la cuisson au four ou à la vapeur de la pâte pour fabriquer du pain,
**caractérisé en ce que** la pâte est préparée en mélangeant du blé ou autre farine de céréales, de la levure et un gel d'hydrate de glucomannan.

2. Procédé selon la revendication 1, modifié en ce qu'une poudre de cuisson synthétique est utilisée à la place de la levure et en ce que l'étape de fermentation est omise.

3. Procédé selon la revendication 1 ou la revendication 2, dans lequel le gel d'hydrate de glucomannan est préparé à partir d'un glucomannan en poudre très fine qui passe à travers un tamis à mailles 160.

4. Procédé selon la revendication 1, 2 ou 3, dans lequel un ou plusieurs éléments parmi des saccharides, des huiles, des matières grasses, des produits laitiers et du sel sont également utilisés dans la préparation de la pâte.

5. Procédé selon l'une quelconque des revendications précédentes, dans lequel, avant la fermentation et la cuisson à la vapeur, la pâte est formée pour enfermer une garniture, de sorte qu'une brioche chinoise soit produite après cuisson à la vapeur.

6. Procédé selon la revendication 5, dans lequel la garniture est préparée en utilisant un gel d'hydrate de glucomannan.

7. Pâte comprenant : du blé ou autre farine de céréales ; de la levure ou une poudre de cuisson synthétique ; et un gel d'hydrate de glucomannan.

8. Pâte selon la revendication 7, comprenant en outre un ou plusieurs éléments parmi des saccharides, des huiles, des matières grasses, des produits laitiers et du sel.
